# FASCICULE DE BREVET EUROPEEN

(11) **EP 2 048 221 B1**
(45) Date de publication et mention de la délivrance du brevet: **21.09.2011**
(21) Numéro de dépôt: 08447043.4
(22) Date de dépôt: 08.10.2008
(51) Int. Cl.: C12C 7/22, C12C 13/02

(54) **Procédé et dispositif pour l'élimination de substances volatiles d'un moût de brasserie**
Verfahren und Vorrichtung zum Entfernen von flüchtigen Substanzen aus der Bierwürze
Method and device for eliminating volatile substances from beer wort

(30) Priorité: 11.10.2007 BE 200700491
(43) Date de publication de la demande: 15.04.2009
(73) Titulaire: Talleres Landaluce S.A., 39312 Polanco Cantabria (ES)
(72) Inventeur: Iniguez Rodriguez, Domingo Antonio, 39300 Torrelavega (Cantabria) (ES); Tigel Gil, Rafael Angel, 7000 Mons (BE)
(74) Mandataire: Cauchie, Daniel

(56) Documents cités:
- EP-A- 1 469 062
- EP-A- 1 666 580
- WO-A-2005/044971
- WO-A-2006/008064
- DE-U1-202007 006 586

## Description

La présente invention concerne un procédé pour l'élimination de substances volatiles présentes dans un moût de brasserie ainsi qu'à un dispositif pour sa mise en oeuvre.

Plus précisément, l'invention concerne un procédé pour l'élimination de substances volatiles indésirables présentes dans un moût de brasserie à ébullition dans une chaudière qui comprend un circuit de circulation forcée de moût muni d'une pompe lequel débouche à l'intérieur de cette chaudière et se termine par une cheminée interne dont l'extrémité distale est située au-dessus de la surface d'une réserve de moût à ébullition.

L'une des étapes de la fabrication de la bière consiste à réaliser un mélange de malt, d'eau et éventuellement de matières à base d'amidon (maische). Après saccharification, ce mélange est d'abord filtré, de manière à en séparer le moût des drèches puis le moût clair obtenu est porté à ébullition avec pour effet de le stériliser. De cette dernière opération, relativement complexe, dépendront non seulement les qualités organoleptiques de la bière mais aussi la stabilité de la mousse.

Parallèlement, cette ébullition a pour conséquence de former des substances réductrices, d'assurer une extraction des composés du houblon, de provoquer la coagulation des protéines et de permettre la formation de composés volatils.

L'ébullition permet également de modifier la densité du moût jusqu'à la valeur désirée et d'éliminer des substances volatiles indésirables qui se sont formées notamment des composants aromatiques en particulier des composés soufrés tels que le sulfure de diméthyle (DMS).

Dans le passé, étant donné le manque de performance des dispositifs de filtration, une évaporation importante, pouvant atteindre jusqu'à 10%, devait être entreprise pour aboutir à une densité voulue du moût, ce qui éliminait de manière concomitante les composants volatils non désirés. Un tel procédé nécessitait, par conséquent, une consommation importante d'énergie.

A ce jour, les dispositifs de filtration étant plus performants, il est possible d'obtenir un moût de densité élevée sans avoir recours à une évaporation. Comme, celle-ci n'est plus de première nécessité pour corriger la densité, l'élimination des substances volatiles devient le but principal de cette évaporation, les autres objectifs étant atteints par d'autres paramètres (aspect, température, pH).

Pour cette raison, on a proposé des procédés capables de ne faire appel qu'à une faible évaporation et à ne mettre en oeuvre qu'une quantité restreinte d'énergie. Ainsi, on a rapporté dans la demande de brevet US 2007/0134387 un procédé de cuisson du moût de bière apte à assurer une réduction de la teneur notamment en DMS responsable d'une altération désagréable du goût. Selon cette méthode, le moût est chauffé à ébullition dans une chaudière munie d'un cuiseur intérieur doté d'un échangeur thermique, un écran déflecteur et un circuit de circulation forcée du moût comportant une pompe et passant par le cuiseur. Ce circuit contient, en surplus, un segment de conduit relié à une pompe, ce segment débouchant dans la chaudière au-dessus de l'écran déflecteur par l'intermédiaire d'une ouverture à section de sortie réduite. En outre, au-dessus de cette ouverture se trouve un dispositif de répartition en couche mince. Le flux de moût provenant de la réserve, pompé dans le circuit de circulation, monte dans le segment de conduit débouchant à l'intérieur de la chaudière puis, après passage par le répartiteur en couche mince, est guidé et dirigé à l'extérieur du conduit vers la réserve de moût en une couche mince en forme d'ombrelle. De cette manière, un échange des substances volatiles s'opère entre le jet de moût en couche mince et la vapeur d'eau issue de la réserve de moût.

Cette ré-introduction, sous forme d'une couche mince, du moût chauffé et pompé ne s'est toutefois pas avérée suffisante pour assurer une élimination substantielle des substances volatiles non désirées. En effet, l'évaporation principale se produisant à la sortie du dispositif de répartition en couches minces, la vapeur d'eau émise est perdue pour l'échange des composés volatils. En outre, la couche mince en forme d'ombrelle crée un volume fermé, à l'intérieur de la chaudière, ce qui complique l'élimination de ces substances.

La présente invention a pour but de proposer un procédé simple, peu coûteux, ne nécessitant qu'un minimum d'énergie et qui permet de pallier cet inconvénient de l'état de la technique en ce qu'il permet d'améliorer significativement l'élimination des substances volatiles indésirables d'un moût de brasserie.

Pour atteindre ce but, le procédé du type indiqué précédemment est caractérisé en ce que l'on provoque, de manière sensiblement uniforme et homogène dans le volume intérieur libre de la chaudière défini par la paroi latérale de celle-ci, la surface du moût de réserve et ladite extrémité distale de la cheminée, un échange de substances volatiles entre du moût à ébullition projeté dans la quasi-totalité de ce volume et une phase gazeuse chaude et ascendante.

Dans le présent contexte, aussi bien dans la description que dans les revendications, on entend par « extrémité distale », l'extrémité la plus éloignée du fond de la chaudière et par « extrémité proximale », l'extrémité la plus proche du fond de la chaudière.

Cette phase gazeuse chaude, qui est amenée à remplacer en totalité la phase gazeuse initialement présente dans la chaudière, est avantageusement une phase gazeuse portée à une température sensiblement égale à la température du moût à l'ébullition, c'est-à-dire de l'ordre de 100°C. A cet effet, la vapeur d'eau constitue une phase gazeuse de choix. Toutefois, il est possible de faire appel à un autre gaz, avantageusement un gaz non oxydant tel que, par exemple, l'anhydride carbonique.

Habituellement et selon une mise en oeuvre particulièrement préférée, la phase gazeuse est sous forme de vapeur d'eau issue de la réserve de moût à ébullition.

En conséquence, selon une autre caractéristique de l'invention, l'on provoque un échange de substances volatiles entre le moût à ébullition sortant de manière descendante de la cheminée à l'intérieur de la chaudière et de la vapeur d'eau ascendante issue de la réserve de moût à ébullition à l'intérieur de cette chaudière.

Cette vapeur d'eau est généralement produite à l'intérieur même de la chaudière mais, selon une autre mise en oeuvre, peut être amenée de l'extérieur, c'est-à-dire injectée dans du moût présent dans la chaudière ou introduite dans ce moût sous forme de moût à ébullition.

L'échange des substances volatiles est avantageusement obtenu à partir d'une multitude de projections de moût bouillant provenant de la cheminée, à l'intérieur de la chaudière. Ces projections sont issues d'une pluralité d'orifices répartis radialement, selon un angle de 360°, sur la totalité de la hauteur de l'enveloppe de cette cheminée émergeant au-dessus du niveau de la réserve de moût à ébullition.

D'autre part, le niveau du moût dans la chaudière est, en général, maintenu relativement bas en sorte que l'émission de vapeur d'eau, à partir de ce moût, puisse se produire le plus bas possible dans cette chaudière. La surface de contact entre le moût projeté et la vapeur d'eau ascendante issue de la réserve de moût, vapeur d'eau qui a avantageusement remplacé l'atmosphère initiale de la chaudière, se trouve ainsi très significativement accrue notamment par rapport au procédé antérieur décrit précédemment. D'autre part, à l'inverse de ce même procédé antérieur, ces projections de moût ne créent pas de volume fermé, de la vapeur parvenant toujours à s'échapper entre les différentes projections.

En conséquence, l'efficacité de la vapeur d'eau issue du moût à ébullition se trouve nettement renforcée par rapport au procédé antérieur et l'échange de substances volatiles entre le moût projeté et la vapeur d'eau ascendante se révèle fortement amélioré en sorte que lesdites substances volatiles, entraînées par cette vapeur d'eau, peuvent être facilement éliminées de la chaudière.

Des tests pratiqués selon la méthode de l'invention ont montré que l'élimination des composés volatils se révèle en fait indépendante de l'évaporation, dans un moût de brasserie porté à une température de l'ordre de 100°C, mais dépend davantage du gradient de concentration de ces substances volatiles (DMS) entre la phase liquide de moût à l'ébullition et une phase gazeuse, par exemple la phase vapeur issue de ce moût chauffé.

A cet effet, on a utilisé une colonne comportant à sa partie haute un orifice d'entrée de moût bouillant, à sa partie basse un orifice pour l'introduction éventuelle d'une phase gazeuse ainsi qu'à son sommet, un orifice d'échappement de gaz. Cette colonne est également munie d'une plaque ajourée transversale, disposée sous l'orifice d'entrée du moût et d'un orifice, pour prise d'échantillon, situé au-dessus de l'orifice d'introduction d'une phase gazeuse.

○Le test a consisté à introduire du moût bouillant à la partie haute de la colonne ce qui, après passage par la plaque ajourée qui le répartit en une multitude de jets, provoque sa chute et simultanément sa rencontre avec une phase gazeuse maintenue dans cette colonne. Cette phase gazeuse peut être stationnaire si elle est constituée de gaz immobile, par exemple la phase gazeuse présente dans la colonne au début du test. Cependant, cette phase peut être dynamique et ascendante lorsqu'un gaz chaud est produit à cette partie basse soit par introduction à partir d'une source extérieure à la réserve de moût à l'ébullition soit à partir de vapeur d'eau s'échappant d'une réserve de moût à ébullition placée sous la colonne. A la suite du mouvement descendant provoqué par la chute du moût dans la colonne se crée un échange entre ce moût chargé de substances volatiles et la phase gazeuse qui en est dépourvue.

Les résultats relevés ont été exprimés en pourcentage de réduction du taux de composés volatils (DMS) du moût entre le niveau de son introduction dans la colonne (« entrée » dans le tableau ci-dessous) et le moût récolté au bas de celle-ci au niveau de la prise d'échantillon (« sortie » dans le tableau ci-dessous).

Les résultats suivants ont été enregistrés :

| Phase gazeuse | | DMS (ppm) | | % de réduction du DMS |
|---|---|---|---|---|
| | | Entrée | Sortie | |
| a.) | Stationnaire | | | |
| | Air dans la colonne | 332 | 203 | 38 |
| b.) | Dynamique | | | |
| ○ | Vapeur d'eau introduite (1% du moût intr oduit) | 345 | 63 | 82 |
| ○ | Air chaud introduit | 349 | 66 | 81.2 |
| ○ | Vapeur d'eau produite par la réserve de moût suite à une dépression provoquée par une pompe à vide | 362 | 66 | 82 |

Ces résultats montrent que l'élimination des substances volatiles d'un moût de brasserie porté à environ 100°C est bien indépendante de l'évaporation.

Le procédé selon l'invention peut être mis en oeuvre moyennant un dispositif comprenant une chaudière, un cuiseur comportant un échangeur de chaleur et un circuit de circulation forcée de moût provenant d'une réserve à l'intérieur de la chaudière, ce circuit comportant notamment une portion de conduit ou cheminée située au-dessus du niveau de la réserve de moût.

Ainsi, selon un autre de ses aspects, l'invention concerne un dispositif pour l'élimination de substances volatiles indésirables présentes dans un moût de brasserie, du genre comprenant une chaudière et un circuit de circulation forcée de moût qui débouche à l'intérieur de la chaudière et se termine par une cheminée interne dont l'extrémité distale est située au-dessus de la surface d'une réserve de moût à ébullition, ce circuit comprenant sur son parcours une pompe et un cuiseur comportant un échangeur de chaleur, caractérisé en ce que la cheminée est obturée à son extrémité distale et est percée d'une pluralité d'orifices.

Ces orifices peuvent prendre différentes formes comme, par exemple, la forme de trous circulaires. Toutefois, et de manière particulièrement avantageuse, ces orifices correspondent à des fentes, préférentiellement disposées selon l'axe longitudinal de la cheminée.

Selon une autre caractéristique du dispositif de l'invention, le circuit de circulation de moût comporte un venturi disposé à l'entrée de ce circuit dans la chaudière.

Ce venturi a notamment pour effet d'éviter la cavitation de la pompe placée à l'extérieur de la chaudière et de laisser le moût circulant pénétrer dans cette chaudière, suite à la dépression occasionnée par le fonctionnement du thermosiphon ainsi créé, ce qui a pour avantage de provoquer des turbulences et d'améliorer l'homogénéité dans la réserve de moût.

De surcroît, selon une caractéristique supplémentaire de l'invention, le cuiseur peut être disposé à l'intérieur ou à l'extérieur de la chaudière.

Lorsque ce cuiseur est situé à l'intérieur de la chaudière, et selon une autre caractéristique de l'invention, l'extrémité proximale ouverte de la cheminée reçoit l'extrémité distale ouverte d'un déflecteur, cette extrémité distale présentant une section inférieure à la section de l'extrémité proximale de la cheminée à même hauteur.

D'autre part, et selon une caractéristique supplémentaire de l'invention, lorsque ce cuiseur est situé à l'extérieur de la chaudière, le circuit de circulation du moût comporte, en aval dudit cuiseur, un conduit d'amenée de moût débouchant à l'intérieur de la chaudière avantageusement sous le niveau de la réserve de moût.

Cette amenée de moût à ébullition dans la réserve a pour effet d'y introduire la vapeur d'eau nécessaire à la mise en oeuvre du procédé de l'invention.

Toutefois, de manière à réguler le débit de ce moût de réserve dans ledit conduit d'amenée, une vanne de régulation est avantageusement disposée sur le parcours de ce conduit.

Des tests supplémentaires ont été pratiqués en vue de comparer l'efficacité de la méthode décrite dans la demande de brevet US 2007/0134387(« méthode A »), qui met en oeuvre une projection de moût bouillant selon une couche mince en forme d'ombrelle et la méthode selon l'invention (« méthode B ») qui fait appel à une multitude de projections de moût bouillant.

A cet effet, on a utilisé d'une part le dispositif décrit dans cette demande de brevet US et d'autre part le dispositif, objet de la présente invention, et on a recherché, pour les deux méthodes, le taux d'évaporation de vapeur d'eau d'un moût à ébullition qui permet l'élimination d'un taux sensiblement identique de composés volatils (DMS). Pour chacun de ces essais, l'évaporation a été menée à taux constant et les taux de DMS ont été déterminés au début et à la fin de chaque test, ceux-ci ayant été réalisés durant le même temps.

Les résultats suivants ont été obtenus :

| Méthode | DMS (ppm) | | % réduction DMS | % évaporation |
|---|---|---|---|---|
| | Début | Fin | | |
| A | 410 | 65 | 84,1 | 8 |
| B | 390 | 63 | 83,8 | 2,8 |

Ces résultats montrent que pour un taux d'élimination du DMS pratiquement identique, le taux d'évaporation, lors de la mise en oeuvre de la méthode et du dispositif selon l'invention, est près de trois fois inférieur au taux enregistré lors de l'utilisation de la méthode et du dispositif antérieur. Par conséquent, la méthode selon l'invention et le dispositif pour sa mise en oeuvre permet une économie appréciable d'énergie sans modification importante de la densité de départ du moût.

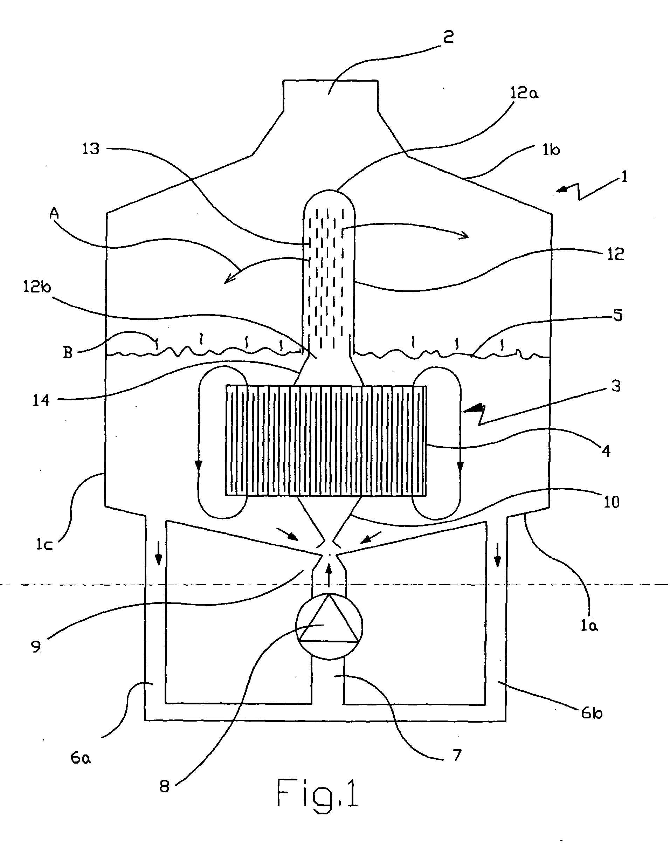

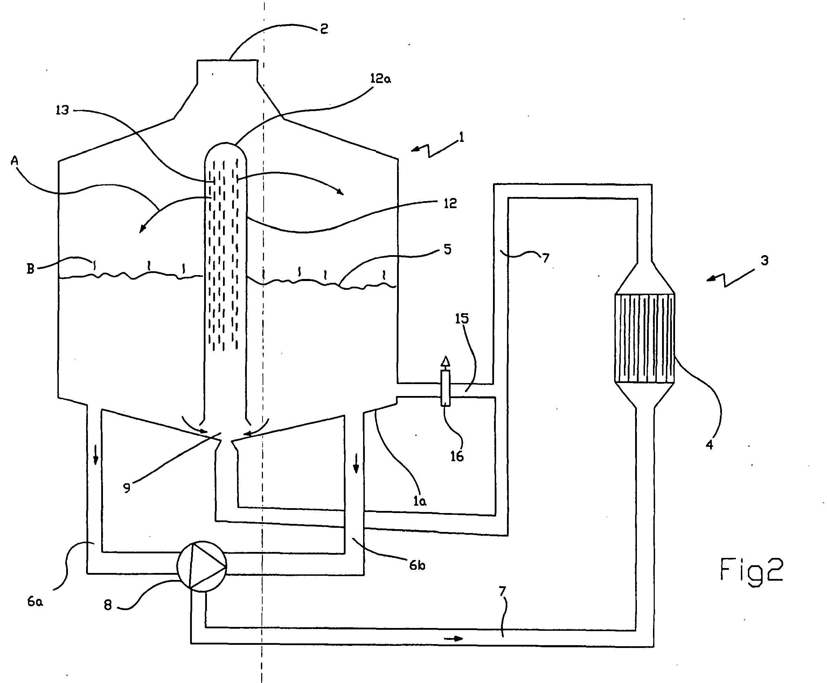

L'invention sera mieux comprise et d'autres buts, caractéristiques et avantages de celle-ci apparaîtront plus clairement au cours de la description explicative qui va suivre faite en référence aux dessins schématiques donnés uniquement à titre d'exemples illustrant des modes de réalisation de l'invention et dans lesquels :
◆ la figure 1 est une vue schématique en coupe frontale d'un premier mode de réalisation du dispositif selon l'invention,
◆ la figure 2 est une vue schématique en coupe frontale d'un second mode de réalisation du dispositif selon l'invention.

Tel que représenté à cette figure 1, un dispositif pour l'élimination de substances volatiles indésirables comprend une chaudière 1, généralement circulaire, destinée à recevoir une réserve de moût de brasserie, cette chaudière comprenant un fond 1a, un sommet 1b et une paroi latérale 1c. En outre, cette chaudière est munie d'un orifice 2 d'évacuation de composants gazeux et d'un cuiseur 3 intérieur, positionné selon l'axe central de ladite chaudière, lequel comporte un système échangeur calorifique. Ce système comprend une pluralité de conduits 4 disposés selon l'axe central de cette chaudière et dont les extrémités sont ouvertes. Ces conduits sont chauffés de préférence par de la vapeur ou de l'eau chaude selon un système d'approvisionnement connu (non représenté). D'autre part, ces conduits sont positionnés en sorte que leurs extrémités proximales se trouvent à distance suffisante du fond 1a de la chaudière et leurs extrémités distales sous le niveau 5 de la réserve de moût.

La figure 1 montre également un circuit pour la circulation du moût, dont le sens est indiqué par des flèches, comprenant un ensemble de segments ou portions de conduits à savoir des portions 6a et 6b issues du fond 1a de la chaudière et se fondant en un segment 7 unique sur le parcours duquel une pompe 8 est disposée. Le mode de réalisation illustré sur cette figure fait appel, par conséquent, à deux accès à la réserve intérieure de moût. Toutefois, selon d'autres modes de réalisation, un seul accès ou, au contraire, trois accès ou davantage peuvent être envisagés, ces différents accès étant reliés à une pompe, de préférence unique, par des segments ou portions de conduits.

Le circuit de circulation se prolonge alors à l'intérieur de la chaudière d'abord par un venturi 9 associé à un déflecteur 10, ensuite par le cuiseur 3 et enfin par une portion interne de conduit 12, formant cheminée, disposé selon l'axe principal de la chaudière. Ce venturi a notamment pour fonction de prévenir la cavitation de la pompe 8, d'accroître l'homogénéité dans la réserve de moût et d'assurer dans le cuiseur 3 une entrée de moût en provenance directe de cette réserve ainsi que de moût en provenance de cette réserve après transit par la pompe 8.

On remarque également, à la figure 1, que la cheminée 12 est percée d'une multitude d'orifices 13 sous forme de fentes situées dans l'axe central de la chaudière 1. Par ailleurs, l'extrémité distale 12a est complètement obturée tandis que l'extrémité proximale 12b, qui est ouverte, reçoit l'extrémité distale d'un déflecteur tronconique 14. Tel que visible à la figue 1, cette extrémité distale est de section inférieure à la section, à même hauteur, de la cheminée 12, en sorte qu'un orifice subsiste entre ce déflecteur 14 et cette cheminée 12.

A la lumière de ce qui précède, on comprend que le moût à purifier, disposé dans la chaudière, est chauffé à ébullition par passage dans les conduits 4 du système échangeur calorifique du cuiseur 3 provoquant une émission de vapeur d'eau qui remplace peu à peu l'atmosphère initiale de la chaudière. D'autre part, le chauffage dans l'échangeur de chaleur provoque une élévation du moût dans ces conduits 4, le rejet vers la réserve du moût chauffé qui rejoint, par thermosiphon, la partie basse de cette réserve et une nouvelle aspiration de moût dans lesdits conduits 4 créant un cycle thermique et un état de turbulence propre à homogénéiser le moût de la réserve. Par les portions de conduits 6a et 6b, la pompe 8 enclenchée refoule alors, vers le venturi 9, ce moût bouillant dont la vitesse de déplacement augmentée par la présence de ce venturi induit une aspiration de moût supplémentaire provenant de la réserve. Ce moût, qui est ensuite envoyé dans la cheminée 12, bute contre son extrémité distale 12a et est dévié à grande vitesse vers l'extérieur par les fentes 13 en des jets laminaires (représentés par la flèche A) répartis dans la quasi-totalité du volume libre de la chaudière. Ces jets retombent alors dans la réserve de moût après avoir échangé au passage, avec la vapeur d'eau (représentée par la flèche B) s'élevant de cette réserve, les substances volatiles qu'ils transportaient et qui s'échappent à l'extérieur de la chaudière par l'orifice 2 d'évacuation. D'autre part, les retombées de moût provenant des fentes 13 augmentent la turbulence dans la réserve de moût et améliorent l'effet piston dans la chaudière.

Quant à l'excédant de moût n'ayant pu s'échapper par les fentes 13, celui-ci s'écoule le long de la paroi interne de la cheminée 12 passe par l'orifice situé entre l'extrémité proximale 12b de la cheminée et le déflecteur 14 et est récupéré par la réserve de moût fournissant ainsi, à cette réserve, la possibilité d'une évaporation supplémentaire.

Selon un autre mode de réalisation à la figure 2, le dispositif pour l'élimination de substances volatiles comprend une chaudière 1 munie d'un orifice 2 d'évacuation et d'un cuiseur 3 extérieur à la chaudière. Celui-ci comporte un système échangeur calorifique comprenant une pluralité de conduits 4 dont les extrémités sont ouvertes, ces conduits étant chauffés par de la vapeur ou de l'eau chaude selon un dispositif classique (non représenté).

Tel que visible également à la figure 2, le dispositif comporte en outre un circuit de circulation de moût, dont le sens est indiqué par des flèches, comprenant, issues du fond la de la chaudière, des sections de conduits 6a et 6b se fondant en un conduit unique 7 après passage par une pompe 8. Ce conduit 7, qui transite par le cuiseur 3, se prolonge jusqu'à la chaudière au niveau d'un venturi 9 situé à la base d'une cheminée 12 obturée à son extrémité distale 12a et percée d'une multitude d'orifices 13 sous forme de fentes. On observe également qu'à la sortie du cuiseur, c'est-à-dire en aval de celui-ci, le conduit 7 se divise en un conduit 15 muni d'une vanne 16 de régulation, ce conduit débouchant dans la chaudière au-dessous du niveau 5 d'une réserve de moût.

Lors d'une mise en oeuvre d'un tel dispositif, le moût chauffé dans le cuiseur et provenant du conduit 7 est introduit à grande vitesse dans la cheminée 12 de la chaudière grâce aux effets combinés de la pompe 8 et du venturi 9. Conjointement, une fraction de ce moût à ébullition est dérivée par le conduit 15 dans la réserve de moût fournissant ainsi de la vapeur d'eau à un niveau très bas dans la chaudière. Cette introduction de moût, par le conduit 15, est régulée par la vanne 16 qui est complètement ouverte en début d'opération de chauffage dans le cuiseur 3, c'est-à-dire lorsqu'un faible volume de vapeur d'eau entre dans la chaudière 1. Cette vapeur (représentée par les flèches B), en s'échappant de la réserve, rencontre le moût bouillant projeté dans la cheminée et qui a été dévié à l'extérieur de celle-ci par les fentes 13 en une multitude de jets laminaires (représentés par les flèches A) occupant la quasi-totalité du volume libre qui subsiste dans la chaudière au-dessus du niveau 5 de moût. Cette vapeur d'eau s'échappe alors par l'orifice 2 après avoir entraîné au passage les substances volatiles transportées par les jets de moût. Durant cette phase de chauffage à ébullition, la vanne 16 se ferme partiellement permettant ainsi une régulation du débit de moût à ébullition passant par la cheminée 12. Si nécessaire, par exemple lorsque des projections encore trop importantes de moût bouillant s'échappent de la cheminée, la vitesse de la pompe peut être diminuée grâce à un variateur de fréquence qui l'équipe.

Idéalement, une installation d'ébullition d'un moût de brasserie doit être apte à assurer :
* la température d'évaporation du moût la plus élevée possible ainsi qu'une homogénéité correcte,
* une agitation suffisante à la fois thermique, si l'évaporation est intense ou mécanique dans le cas contraire,
* une évaporation la plus faible possible mais suffisante de manière à modifier l'atmosphère de la chaudière (remplacement de l'air par la vapeur d'eau),
* une élimination importante des substances volatiles indésirables en augmentant au maximum la surface de contact liquide/gaz et un entraînement de ces substances hors de la chaudière par la vapeur formée au niveau de la réserve de moût,
* un contrôle efficace de la mousse produite.

Le procédé selon l'invention ainsi que le dispositif pour sa mise en oeuvre se sont révélés suffisamment performants pour procurer ces avantages.
D'autre part, les procédé et dispositif selon l'invention présentent plusieurs caractéristiques avantageuses par rapport à l'état de la technique. A titre d'exemples, le procédé selon l'invention offre, par rapport au procédé, objet de la demande de brevet US 2007/0134387, une plus grande surface d'échange des substances volatiles ainsi qu'un plus grand volume de vapeur d'eau efficace et, par conséquent, un meilleur taux d'élimination de celles-ci. De même, on n'enregistre pas de concentration en moût au niveau de la cheminée percée d'orifices, ce qui n'est pas le cas au niveau du dispositif de répartition en couches minces de cette demande de brevet US.

## Revendications

1. Procédé pour l'élimination de substances volatiles indésirables présentes dans un moût de brasserie à ébullition dans une chaudière (1) qui comprend un circuit de circulation forcée de moût muni d'une pompe (8) lequel débouche à l'intérieur de cette chaudière et se termine par une cheminée interne (12) dont l'extrémité distale (12a) est située au-dessus de la surface (5) d'une réserve de moût à ébullition, **caractérisé en ce que** l'on provoque, de manière sensiblement uniforme et homogène dans le volume intérieur libre de la chaudière défini par la paroi latérale (1c) de celle-ci, la surface de la réserve de moût et ladite extrémité distale de la cheminée, un échange de substances volatiles entre du moût à ébullition projeté dans la quasi-totalité de ce volume et une phase gazeuse chaude et ascendante.

2. Procédé selon la revendication 1, **caractérisé en ce que** la phase gazeuse est de la vapeur d'eau ou un gaz non oxydant.

3. Procédé selon la revendication 1 ou 2, **caractérisé en ce que** la phase gazeuse est de la vapeur d'eau issue de ladite réserve de moût et occupant ledit volume de la chaudière.

4. Procédé selon l'une des revendications 1 à 3, **caractérisé en ce que** l'on provoque un échange de substances volatiles entre le moût à ébullition sortant de manière descendante de la cheminée (12) à l'intérieur de la chaudière (1) et de la vapeur d'eau ascendante issue de la réserve de moût à ébullition à l'intérieur de cette chaudière.

5. Dispositif pour l'élimination de substances volatiles indésirables présentes dans un moût de brasserie, du genre comprenant une chaudière (1) et un circuit de circulation forcée de moût qui débouche à l'intérieur de cette chaudière et se termine par une cheminée interne (12) dont l'extrémité distale (12a) est située au-dessus de la surface (5) d'une réserve de moût à ébullition, ce circuit comprenant sur son parcours une pompe et un cuiseur comportant un échangeur de chaleur, **caractérisé en ce que** la cheminée est obturée à son extrémité distale(12a) et est percée d'une pluralité d'orifices (13).

6. Dispositif selon la revendication 5, **caractérisé en ce que** les orifices correspondent à des fentes.

7. Dispositif selon la revendication 5 ou 6, **caractérisé en ce que** le circuit de circulation de moût comporte un venturi (9) disposé à l'entrée de ce circuit dans la chaudière.

8. Dispositif selon l'une des revendications 5 à 7, **caractérisé en ce que** le cuiseur est disposé à l'intérieur de la chaudière.

9. Dispositif selon l'une des revendications 5 à 8, **caractérisé en ce que** l'extrémité proximale (12b) ouverte de la cheminée reçoit l'extrémité distale ouverte d'un déflecteur (14), cette extrémité distale présentant une section inférieure à la section de l'extrémité proximale de la cheminée à même hauteur.

10. Dispositif selon l'une des revendications 5 à 7, **caractérisé en ce que** le cuiseur (3) est disposé à l'extérieur de la chaudière.

11. Dispositif selon l'une des revendications 5,6,7 ou 10, **caractérisé en ce que** le circuit de circulation du moût comporte, en aval du cuiseur, un conduit (15) d'amenée de moût débouchant à l'intérieur de la chaudière(1) sous le niveau (5) de la réserve de moût.

12. Dispositif selon la revendication 11, **caractérisé en ce qu'**une vanne de régulation (16) est disposée sur le parcours du conduit (15).

## Claims

1. A method for removing undesirable volatile substances found in a brewery wort to be boiled in a kettle (1) which comprises a forced wort flow circuit provided with a pump (8), which opens to the inside of this kettle and ends with an inner stack (12) having a distal end (12a) located above the surface (5) of a storage of wort to be boiled, **characterised in that** in the free inside volume of the kettle defined by the side wall (1c) thereof, the surface of the wort storage and said distal end of the stack, the volatile substances are caused to be exchanged in a substantially even and homogeneous manner from the wort to be boiled in nearly all this volume to a hot and ascending gas phase.

2. The method according to claim 1, **characterised in that** the gas phase is water vapour or a non-oxidative gas.

3. The method according to claim 1 or 2, **characterised in that** the gas phase is water vapour from said wort storage and occupying said volume of the kettle.

4. The method according to one of claims 1 to 3, **characterised in that** the volatile substances are caused to be exchanged from the wort to be boiled coming down from the stack (12) inside the kettle (1) to ascending water vapour from the storage of wort to be boiled inside this kettle.

5. A device for removing undesirable volatile substances found in a brewery wort of the type comprising a kettle (1) and a forced wort flow circuit which opens to the inside of this kettle and ends with an inner stack (12) having a distal end (12a) located above the surface (5) of a storage of wort to be boiled, this circuit comprising therealong a pump and a cooker comprising a heat exchanger, **characterised in that** the stack is sealed at the distal end (12a) thereof and pierced with a plurality of holes (13).

6. The device according to claim 5, **characterised in that** the holes correspond to slits.

7. The device according to claim 5 or 6, **characterised in that** the wort flow circuit comprises a venturi (9) provided at the inlet of this circuit in the kettle.

8. The device according to one of claims 5 to 7, **characterised in that** the cooker is provided inside the kettle.

9. The device according to one of claims 5 to 8, **characterised in that** the proximal end (12b) opening to the stack, accommodates the open distal end of a deflector (14), such distal end having a section lower than the proximal end section of the stack at the same height.

10. The device according to one of claims 5 to 7, **characterised in that** the cooker (3) is provided outside the kettle.

11. The device according to one of claims 5, 6, 7 or 10, **characterised in that** the wort flow circuit comprises, downstream of the cooker, a wort feed duct (15) opening to the inside of the kettle (1) under the level (5) of the wort storage.

12. The device according to claim 11, **characterised in that** a control valve (16) is provided along the duct (15).

## Patentansprüche

1. Verfahren zur Entfernung von unerwünschten flüchtigen Substanzen in einer Brauereiwürze in einer Würzepfanne (1), welche einen mit einer Pumpe (8) ausgestatteten Würze-Zwangs-Umlauf umfasst, der in den Innenraum dieser Würzepfanne mündet und in einer inneren Steigleitung (12) endet, deren distales Ende (12a) sich über dem Füllstand (5) eines Würzevorrats befindet, **dadurch gekennzeichnet, dass** auf etwa gleichmäßige und homogene Art und Weise in dem freien, durch die Gefäßwand (1c), den Füllstand des Würzevorrats und das genannte distale Ende der Steigleitung definierten Innenraum der Würzepfanne ein Austausch von flüchtigen Substanzen zwischen der kochenden Würze, welche praktisch in den gesamten Raum dieses Volumens gespritzt wird und einer heißen, aufsteigenden Gasphase erzeugt wird.

2. Verfahren gemäss Anspruch 1, **dadurch gekennzeichnet, dass** es sich bei der Gasphase um Wasserdampf oder ein nicht oxidierendes Gas handelt.

3. Verfahren gemäss Anspruch 1 oder 2, **dadurch gekennzeichnet, dass** es sich bei der Gasphase um Wasserdampf handelt, welcher aus dem Würzevorrat stammt und den genannten Raum der Würzepfanne ausfüllt.

4. Verfahren gemäss einem der Ansprüche 1 bis 3, **dadurch gekennzeichnet, dass** ein Austausch von flüchtigen Substanzen zwischen der aus der Steigleitung (12) in den Innenraum der Würzepfanne (1) absteigenden Würze und dem aus dem aus dem Würzevorrat im Innenraum dieser Würzepfanne austretenden Wasserdampf erzeugt wird.

5. Vorrichtung zur Entfernung von unerwünschten flüchtigen Substanzen in einer Brauereiwürze, welche eine Würzepfanne (1) und einen Würze-Zwangs-Umlauf umfasst, der in den Innenraum dieser Würzepfanne mündet und in einer inneren Steigleitung (12) endet, deren distales Ende (12a) sich über dem Füllstand (5) eines Würzevorrats befindet, wobei dieser Umlauf in seinem Verlauf eine Pumpe und einen Kocher mit einem Wärmetauscher umfasst, **dadurch gekennzeichnet, dass** die Steigleitung an ihrem distalen Ende (12a) verschlossen und mit einer Vielzahl von Öffnungen (13) versehen ist.

6. Vorrichtung gemäss Anspruch 5, **dadurch gekennzeichnet, dass** es sich bei den Öffnungen um Schlitze handelt.

7. Vorrichtung gemäss Anspruch 5 oder 6, **dadurch gekennzeichnet, dass** der Würze-Umlauf ein Venturirohr (9) umfasst, welches am Eingang dieses Umlaufs in die Würzepfanne angebracht ist.

8. Vorrichtung gemäss einem der Ansprüche 5 bis 7, **dadurch gekennzeichnet, dass** der Kocher im Innenraum der Würzepfanne angebracht ist.

9. Vorrichtung gemäss einem der Ansprüche 5 bis 8, **dadurch gekennzeichnet, dass** das offene proximale Ende (12b) der Steigleitung das offene distale Ende einer Prallfläche (14) aufnimmt, wobei dieses distale Ende einen kleineren Querschnitt aufweist, als das proximale Ende des Steigrohrs in derselben Höhe.

10. Vorrichtung gemäss einem der Ansprüche 5 bis 7, **dadurch gekennzeichnet, dass** der Kocher (3) außerhalb der Würzepfanne angebracht ist.

11. Vorrichtung gemäss einem der Ansprüche 5, 6, 7 oder 10, **dadurch gekennzeichnet, dass** der Würze-Umlauf im nachgelagerten Bereich des Kochers eine Würze-Zuführungsleitung (15) umfasst, welche in den Innenraum der Würzepfanne (1) unter dem Füllstand (5) des Würzevorrats mündet.

12. Vorrichtung gemäss Anspruch 11, **dadurch gekennzeichnet, dass** ein Regulierventil (16) im Verlauf der Leitung (15) angebracht ist.
